Europäisches Patentamt

European Patent Office

Office européen des brevets

(19)

(11) EP 0 567 195 B1

(12) **EUROPEAN PATENT SPECIFICATION**

(45) Date of publication and mention
of the grant of the patent:
**22.10.1997 Bulletin 1997/43**

(51) Int Cl.<sup>6</sup>: **G05B 19/41**

(21) Application number: **93201150.5**

(22) Date of filing: **21.04.1993**

(54) **Numerical control device and method for control of movement of a tool**

Numerische Steuerungseinrichtung und Verfahren zur Steuerung der Bewegung eines Werkzeuges

Dispositif de commande numérique et procédé de commande du mouvement d'un outil

(84) Designated Contracting States:
**DE FR GB NL**

(30) Priority: **23.04.1992 EP 92201145**

(43) Date of publication of application:
**27.10.1993 Bulletin 1993/43**

(73) Proprietor: **Dr. Johannes Heidenhain GmbH
83301 Traunreut (DE)**

(72) Inventors:
• **Meyer, Piotr Jan,**
**c/o INT. OCTROOIBUREAU B.V.**
**NL-5656 AA Eindhoven (NL)**

• **Ripoll-Ensenat, Noel,**
**c/o INT. OCTROOIBUREAU B.V.**
**NL-5656 AA Eindhoven (NL)**

(56) References cited:
**EP-A- 0 145 967**          **EP-A- 0 270 060**
**EP-A- 0 384 925**

• **COMPUTER AIDED DESIGN vol. 24, no. 4, April
1992, London, GB, pp 223-229; B. PHAM:
'OFFSET CURVES AND SURFACES: A BRIEF
SURVEY'**

**Description**

The invention relates to a numerical control device for control of movement of a tool along a path, the numerical control device comprising

input means for entering path data describing said path,
conversion means for converting said path data to control signals for steering said tool, and
output means for transfer of said control signals to steering means to which said tool is attached. The invention relates also to a method for determining a path of movement for a tool. A tool is, for example, a milling tool of a machining apparatus such as a numerical controlled milling-machine or a lathe or it is part of a robot. The invention can also be applied in techniques like laser or electron-discharge machining.

A device and method for motion control of a machine-tool or robot is known from EP-A 0 384 925. According to the method described in that document a path of movement for a machine-tool or a robot is approximated by means of a plurality of spline segments, each spline being parameterised by a third order polynomial. This allows a considerable reduction of the amount of data needed to describe the path of movement. The use of third order polynomials allows the approximation curve to be continuous and smooth. The polynomials are constructed from four points selected from the path to be followed. Maximum reduction of the amount of data is desirable in order to obtain fast processing in the controller of the machining apparatus or robot. This is obtained by making the spline segments to extend over a portion of the path of movement as long as possible without the approximated curve deviating more from the desired path than a predetermined tolerance. When a spline segment is extended it is parameterised by using points farther apart and a number of intermediate points is selected, at which points said deviation is calculated. If an intermediate point is found at which the deviation exceeds the tolerance, the spline segment has been extended too far and a new spline segment is started.

A disadvantage of the known method is that it provides the controller of the machining apparatus or robot with data approximating the actual path of movement of a tool. Often this path is machine dependent, for example, in case of a milling-machine or lathe, the radius of the milling tool may vary and even, due to wear, not be identical for similar tools or for the same tool at different times. For controlling a robot, the path of movement may be determined by the end points and the requirement to avoid any intermediate obstacles while displacing objects of various size and shape. The exact locations of the end point and the distance of the moving robot clamp to an obstacle may depend on the shape and/or orientation of the object. The known method requires the recalculation of the spline segments for each different situation starting from a large number of points describing the actual path. As the calculation is an iterative process, requiring several approximations with spline segments of different lengths, it is time-consuming or requires significant resources in terms of computer capacity for performing the calculation. Consequently, it is unsuitable to be performed in the numerical control device during a machining operation. For economical reasons a numerical control device cannot be provided with a large computer, nor is it acceptable to stop a milling operation for calculating a path of movement.

It is, *inter alia*, an object of the invention to provide a numerical control device for which it is not necessary for each individual machining operation or object displacement to calculate a spline approximation beforehand. It is also an object of the invention to provide a method for determining a path of movement of a tool that is sufficiently fast and requires so few calculation resources that it can be implemented in a numerical control device.

To this end, a numerical control device according to the invention is characterised in that the conversion means comprise calculation means including parameterising means arranged for

receiving said path data, at least partially, as contour data describing a contour to which said path has an offset determined by an offset value, and
for parameterising said path by means of a plurality of spline segments, each spline segment having end points of which the positions and slopes are derived from said contour data and said offset value,
in that the conversion means further comprise control signal generation means for generating said control signals for steering said tool along a path determined by said spline segments and said control signal generating means generating control signals for a portion of said tool path prior to said parameterising means generating all of the pline segments for the tool path. For a machining apparatus the contour data describe the shape of a workpiece or object to be made and for a robot these data describe an edge of a forbidden area. The radius of the individual milling tool or the size of an object to be displaced is comprised in the offset value. As at each individual point of the contour both slope and position of the path of movement, *i.e.* an offset curve keeping a constant geometrical distance to the contour, can easily be derived from the contour data, a complete description of the path is provided and all information is available that is necessary to parameterise spline segments approximating the offset curve.

A numerical control device according to the invention is further characterised in that

the calculation means are arranged for receiving the contour data in the form of a differentiable function or a plurality of differentiable functions and that the calculation means are arranged for approximating the path in a spline segment by at least one polynomial according to Hermite's formula. An approximation according to Hermite's formula provides a polynomial which satisfies collocation and first degree osculation, *i.e.* matching of both function value and derivative is assured at the points joining the spline segments of the path of movement. In order to assure matching of the derivative, the contour data must be in a form which allows the derivative of the contour to be found. Providing the contour data as a function to be described with a few parameters has the further advantage of reduction of the amount of data necessary for describing the contour.

An important advantage of the use of Hermite's formula in order to approximate the path of movement in each spline segment, is that the maximum deviation between the desired path of movement, as determined by the contour data and the offset value, and the resulting polynomial approximating that path can be estimated directly. Accordingly, an embodiment of the numerical control device according to the invention is characterised in that

the calculation means are arranged for receiving the contour data in the form of parameters describing a multiple differentiable function or a plurality of such functions and in that
the calculation means are arranged for determining, from said contour data and offset value, an estimated maximum error $\varepsilon_{max}$ between the path and the approximation thereof by a polynomial in a spline segment and
for reducing the length of a spline segment if said estimated maximum error exceeds a predetermined tolerance.
As will be discussed hereinafter, the estimation of the deviation requires the $(2n+2)^{nd}$ derivative of the functions describing the contour if the path is approximated by a polynomial of order $(2n+1)$. In this embodiment, the calculation means can be arranged, for example, for starting with a single spline segment or a small number of long spline segments, estimating the deviation in each spline segment and dividing those spline segments in two shorter segments for which the estimated deviation exceeds the preset tolerance value. Of course, not only polynomials according to Hermite's formula, but any other method of approximation having the same quality of providing an approximative error can be used as well.

An alternative embodiment of the numerical control device according to the invention is characterised in that

the calculation means are arranged for receiving the contour data in the form of parameters describing a multiple differentiable function or a plurality of such functions and in that
the calculation means are arranged for determining, from said contour data and said offset value, an approximative error function ($\lambda(u)$) and in that the calculation means are further arranged for determining spline segment lengths such that each spline segment has an estimated maximum error not exceeding the value of said maximum error function in a portion of the path approximated by said spline segment. It will be shown that for a preset tolerance value an approximative error function can be derived which indicates for a spline segment of given start and end points whether the maximum deviation in that specific spline segment may exceed the tolerance value. According to this embodiment the approximative error function is used to assure that in none of the spline segments the tolerance value is exceeded.

This embodiment of the numerical control device according to the invention can be further characterised in that the calculation means are arranged for determining the length of spline segments such that for at least one spline segment said estimated maximum error is substantially equal to the value of said maximum error function in a portion of the path approximated by said at least one spline segment. The approximative error function is used to minimise the number of spline segments by choosing the start and end points of the segments such that the estimated maximum deviation in a spline segment is at most equal to the preset tolerance. This embodiment allows the control of the tool to proceed for a spline segment simultaneous with the calculation of the parameters describing the next spline segment.

Normally, it does not occur that a division in spline segments results in which all segments actually have at least one point of which the estimated deviation is equal to the preset tolerance. Therefore, a further embodiment is characterised in that the calculation means are arranged for determining the length of spline segments such that for each spline segment the ratio between the estimated maximum error and the value of said maximum error function in a portion of the path approximated by said spline segment is substantially equal. The estimated maximum deviation is about equal in all spline segments and no spline segment has an estimated maximum deviation equal to the preset tolerance. The procedure according to this embodiment can be applied if the calculation proceeds fast enough for determining a number of spline segments prior to starting the movement of the tool along the path described by the first of the number of spline segments.

A preferred embodiment of the numerical control device according to the invention is characterised in that the calculation means are arranged for receiving the function or functions describing the contour in the form of parameters of third order polynomials. In this way the contour data themselves may take the form of spline segments in a format conventional for numerical control devices.

Preferably, the numerical control device according to the invention is characterised in that the calculation means are arranged for approximating the path of movement by cubic splines. As the calculation of the estimated maximum error and of the approximated error function requires the use of higher order derivatives, programming is simplified and the necessary resources for performing the calculation, such as memory, can be limited by using simple functions that meet the requirements of continuity and smoothness.

The invention further relates to a numerically controlled machining apparatus for machining of a workpiece according to a predetermined geometry, the machining apparatus being provided with a numerical-control device as described hereinbefore. The input to be provided to such a machining apparatus or lathe consists of function definitions and parameters describing the desired geometry. The conversion of the contour description to a movement of the milling tool and/or the workpiece along offset curves is performed by the numerical control device fast enough not to slow down the machining apparatus.

The invention also relates to a method for determining a path of movement of a numerically controlled tool. According to the invention the method comprises the steps of

reading of path data describing said path
converting said path data into control signals for steering said tool, and
transferring said control signals to said tool and is thereby characterised in that
said path data represent, at least partially, a parameterisation of a contour to which the path of movement has to maintain a distance determined by an offset value,
in that the conversion from path data to control signals comprise the parameterisation of said path by means of a plurality of spline segments, each spline segment having end points of which the positions and the slopes are derived from said contour parameterisation and said offset value
and in that the control signals are obtained from the spline parameterisations and generating control signals for a portion of the tool path prior to said parameterising step generating all of the spline segments for the tool path.

Preferably the method is further characterised in that

the provision of contour data as parameters describing a differentiable function or a plurality of differentiable functions and that
the path in each spline segment is approximated by a polynomial according to Hermite's formula.

These and other, more detailed, aspects of the invention will now be elucidated by way of example with reference to the accompanying drawings.

The drawings show in

Figure 1 diagrammatically a machining apparatus comprising a numerical control device according to the invention;
Figure 2 a portion of a 2-dimensional contour curve together with an associated offset curve;
Figure 3 the approximative error function $\lambda(u)$ for the contour curve shown in Figure 2 and an illustration of an embodiment to define spline segments lengths.

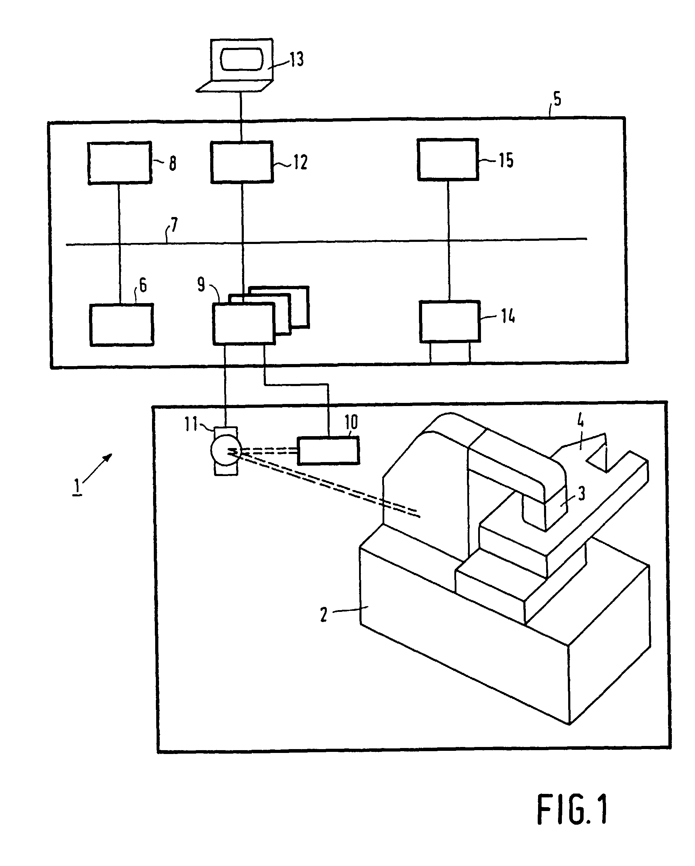

In Figure 1 a machining apparatus 1 is shown diagrammatically. The shown apparatus comprises a milling-machine 2 with a tool 3 for machining a workpiece 4. The machining apparatus 1 comprises further a control device 5 for controlling the movements of the tool 3 relative to the workpiece 4. The control device 5 includes a central processor unit 6 connected for the exchange of data, *via* an internal bus 7, with other components such as a memory 8, a number of input and output interfaces 9 for the input of signals from measurement means 10 and for output of control signals to an actuator 11 like a motor. The measurement means 10 are arranged, *inter alia*, to measure quantities like axis position and rotation velocity which are used in an incremental control system for controlling such quantities. Such control system can comprise a program stored in the memory 8 and executed by the central processor unit 6, in a manner usual for a machining apparatus. The control device 5 also includes a monitor driver 12 for control of a monitor and a keyboard 13, further input and output devices 14 for input and output of signals further occurring in a machining apparatus, such as signals from end-position switches, and signals transported from and to reading and punching devices, not shown, for reading and punching, respectively, of paper tape with data for a workpiece program. Other devices that may be coupled to the control device 5 are, for example, a diskette station as an alternative for the paper tape reader and punch, a printer and an external computer system or a connection with a CAD (Computer Aided Design) system for direct supply of data describing the machining operation to be performed on the workpiece. The required data transport occurs for example *via* a V24-interface.

According to the present invention the data supplied to the numerical control device 5, *via* a paper tape reader, a diskette station or by a wired data connection from a computer or CAD system, comprise contour data of the workpiece. An offset value is entered *via* the same source, is internally available in the control device 5 or can be obtained from the machining apparatus, for example *via* measuring means 10. From the entered contour data, the position and slope at a number of points of an offset curve, *i.e.* a curve following the contour while maintaining a distance equal to the offset value, is determined. The offset curve is the path of the tool of the machining apparatus and the contour is the shape of the workpiece to be obtained.

In general, a two-dimensional curve is defined by a pair of functions $x(u)$ and $y(u)$, $u \in <0,1>$, $u$ is a parameter which can be though of as related to the speed of movement along the curve, *i.e.* a monotonic function of time. The offset curve is defined as the set of points $x_o(u)$, $y_o(u)$ having a geometrical distance from said curve, measured on the normal, that is equal to the offset value $R$:

$$x_o(u) = x(u) - R \frac{y'(u)}{\sqrt{x'(u)^2 + y(u)^2}} \; ; \; y_o(u) = y(u) + R \frac{x'(u)}{\sqrt{x'(u)^2 + y'(u)^2}}. \tag{1}$$

The sign of R (positive or negative) determines the side of the offset curve relative to the curve $x(u)$, y(u). The offset curve can be approximated by a set of polynomials $p_x(u)$ and $p_y(u)$. If they are chosen according to Hermite's formula, they will satisfy collocation and first degree osculation at $n$ points along the curve, *i.e.* for $p_x(u)$:

$$p_x(u_k) = x_o(u_k); \; p'_x(u_k) = x'_o(u_k); \; k = 0,\dots,n. \tag{2}$$

The order of the polynomials is 2n+1. The formulas for the second curve, the y-curve, are analogous and will, therefore, be shown here and in the following only when necessary. Hermite's formula is given by:

$$
\begin{aligned}
p_x(u) &= \sum_{i=0}^{n} H_i(u)x_o(u_i) + \sum_{i=0}^{n} K_i(u)x'_o(u_i) \; ; \\
H_i(u) &= [1 - 2L_i(u_i)(u - u_i)]L_i(u)^2 \; ; \quad K_i(u) = (u - u_i)L_i(u)^2 \; ; \\
L_i(u) &= \frac{\prod\limits_{k=0,k \neq i}^{n}(u - u_k)}{\prod\limits_{k=0,k \neq i}^{n}(u_i - u_k)} \; .
\end{aligned}
\tag{3}
$$

The functions $L_i$, $H_i$ and $K_i$ have the properties:

$$L_i(u_k) = \delta_{ik}; \; H_i(u_k) = \delta_{ik}; \; H'_i(u_k) = 0; \; K_i(u_k) = 0; \; K'_i(u_k) = \delta_{ik};$$

$$\delta_{ik} = 0 \text{ for } i \neq k; \; \delta_{ik} = 1 \text{ for } i=k. \tag{4}$$

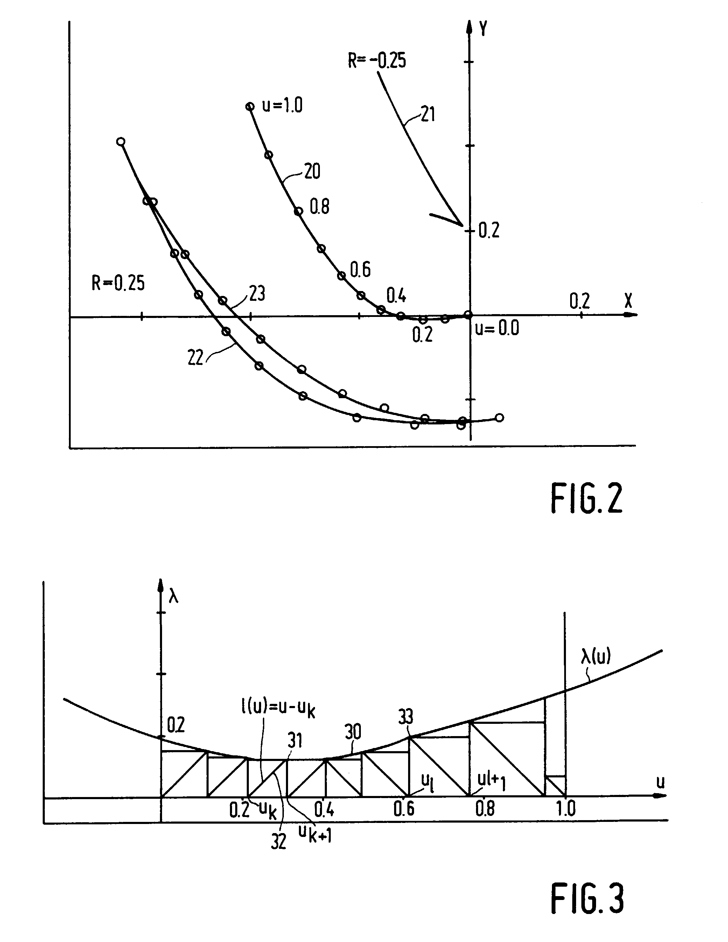

In Figure 2 a contour curve 20 is shown, parameterised by a spline $x(u) = -0.2u^3 + 0.3u^2 - 0.5u$; $y(u) = 0.4u^3 + 0.2u^2 - 0.1u$; $0 < u < 1$. Two offset curves 21 and 22 are shown with offset values $R = -0.25$ and $R = +0.25$, respectively. The Hermite approximation of the offset curve 22 with offset +0.25 is indicated by the curve 23, also a spline from $u_0=0$ till $u_1=1$.

An important feature of Hermite's formula is that the deviation between the original function $x_o(u)$ and the approximation $p_x(u)$ can be estimated. The deviation is given by:

$$x_o(u) - p_x(u) = \frac{x_o^{(2n+2)}(\xi(u))}{(2n+2)!} \prod_{i=0}^{n} (u-u_i)^2; \quad u_0 \leq \xi(u) \leq u_n; \quad u \in \; <u_0, u_n>. \tag{5}$$

$x_o^{(2n+2)}$ denotes the $(2n+2)$nd derivative of the function $x_o(u)$. The function $\xi(u)$ is usually undeterminable but the limitation of its value to the interval $<u_0, u_1>$ allows an upper limit of the deviation to be estimated.

For the approximation of the path of the machining tool from the contour data and the offset value it is sufficient to use a number of polynomials of third order to describe the spline segments. For a third order polynomial the deviation is described by:

$$\varepsilon_x(u) = x_o(u) - p_x\left[\frac{u-u_0}{\Delta u}\right] = \frac{x_o^{(4)}(\xi_x(u))}{4!}(u-u_0)^2(u-u_1)^2 \; ; \tag{6}$$
$$\Delta u = u_1 - u_0; \quad \xi_x(u) \in \; <u_0, u_1> \; .$$

The argument $(u-u_0)/\Delta u$ of the polynomial $p_x$ rescales the function to the interval from 0 to 1, which is a usual way to define splines. For a two dimensional curve the analogous expression for $\varepsilon_y(u)$ is combined with $\varepsilon_x(u)$ for the total deviation $\varepsilon_o(u)$ between the two dimensional spline approximation and the offset curve. The estimate for the total deviation is given by:

$$\varepsilon_o(u) = \sqrt{\varepsilon_x(u)^2 + \varepsilon_y(u)^2} \tag{7}$$

The maximum value of $((u-u_0)^2(u-u_1)^2)$ for $u \in \; <u_0, u_1>$ is equal to $(\Delta u)^4/16$, resulting in the following expression for the maximum value of the deviation:

$$\max \, [\varepsilon_o(u)] \leq \frac{(\Delta u)^4}{4! \cdot 16} \sqrt{\max(x_o^{(4)}(u))^2 + \max(y_o^{(4)}(u))^2} \; ; \; u \in \; <u_0, u_1>. \tag{8}$$

This expression exhibits the fact that the maximum error of the approximation depends on the length $\Delta u$ of the spline segment. In order to be able to estimate the error $\varepsilon_o(u)$, the fourth derivatives of the offset functions $x_o(u)$ and $y_o(u)$ are to be found. The calculation of these fourth derivatives may be facilitated by choosing a reference frame in which the functions are described in a convenient way. In particular, the $x$- and $y$-functions form a vector which can be rotated because the derivative of a rotated vector of functions is the rotated vector of the derivatives of the functions, for a rotation over an angle $\alpha$:

$$x_1^{(n)} = (x\cos\alpha + y\sin\alpha)^{(n)} = x^{(n)}\cos\alpha + y^{(n)}\sin\alpha = (x^{(n)})_1;$$
$$y_1^{(n)} = (-x\sin\alpha + y\cos\alpha)^{(n)} = -x^{(n)}\sin\alpha + y^{(n)}\cos\alpha = (y^{(n)})_1. \tag{9}$$

Herein, the functions with a subscript 1 designate the components of a vector of functions rotated over the angle $\alpha$.

If the contour data are represented in the form of spline segments described by a pair of polynomials $x(u)$ and $y(u)$, or if the data can be converted easily in such a form, a possible convenient rotation is one in which the maximum power in one dimension is reduced, *i.e.* if the contour data have the form of third order polynomials, a rotation such that $y_1(u)$ is a quadratic polynomial and $y_1^{(3)} = 0$ facilitates the calculation. This would reduce the calculation time and provide a better performance for the numerical control device. The magnitude of the rotation angle a to achieve this reduction, can be derived easily by requiring the coefficient of the third order term of either the $x$- or $y$-polynomial to be zero.

For estimating an interval $\Delta u$, *i.e.* the start and end points $u_0$ and $u_1$ of the interval, such that a given preset tolerance value $\varepsilon_{max}$ is not exceeded, the formula (8) leads to:

$$\varepsilon_o(u) \leq \frac{(\Delta u)^4}{384}\sqrt{2}\,|R|\max_{u\,\in\,<u_0,u_0+\Delta u>}\sqrt{f_x^2(u)+f_y^2(u)} \leq \varepsilon_{max};\ \text{or} \tag{10a}$$

$$\Delta u \leq \left[\frac{384\varepsilon_{max}}{\sqrt{2}\,|R|}\right]^{\frac{1}{4}}\min_{u\,\in\,<u_0,u_0+\Delta u>}\left(f_x^2(u)+f_y^2(u)\right)^{-\frac{1}{8}}. \tag{10b}$$

The functions $f_x(u)$ and $f_y(u)$ are derived from the fourth derivatives of the offset curves $x_o(u)$ and $y_o(u)$ as given in formula (1):

$$x_o^{(4)}(u) = x^{(4)}(u) - R\frac{d^4}{du^4}\cos\Psi(u) = R(f_x(u)\cos\Psi(u) - f_y(u)\sin\Psi(u)) \ ;$$

$$y_o^{(4)}(u) = y^{(4)}(u) + R\frac{d^4}{du^4}\sin\Psi(u) = R(f_y(u)\cos\Psi(u) + f_x(u)\sin\Psi(u)) \ ;$$

$$f_x(u) = -4\frac{d\Psi}{du}\frac{d^3\Psi}{du^3} - 3\left[\frac{d^2\Psi}{du^2}\right]^2 + \left[\frac{d\Psi}{du}\right]^4 \ ; \tag{11}$$

$$f_y(u) = -6\left[\frac{d\Psi}{du}\right]^2\frac{d^2\Psi}{du^2} + \frac{d^4\Psi}{du^4} \ ;$$

$$\Psi(u) = -\arctan\left[\frac{x'(u)}{y'(u)}\right] + \text{const.}$$

The function $\Psi(u)$ describes the angular direction of the tangent of the contour curve. The constant, resulting from a possible rotation, is irrelevant for the present purpose as only derivatives of $\Psi(u)$ enter into the expressions for the deviation between the offset curve and its approximation.

Formulas (10a) and (10b) are valid if the contour data are given as third order polynomials. If the fourth derivatives of the functions $x(u)$ and $y(u)$ describing the contour are non-zero, these formulas will exhibit cross terms between $f_x(u)$, $f_y(u)$, $x^{(4)}(u)$ and $y^{(4)}(u)$. The given expressions are independent under rotation of the reference frame, they may be evaluated after performing a convenient rotation.

Having obtained an expression (10a) relating the maximum deviation in a spline segment to the contour data $x(u)$, $y(u)$, the offset value $R$ and the start and end points $u_0$, $u_0+\Delta u$, an embodiment of the numerical control device can be realised by a procedure which is started by using a single spline segment to approximate the whole interval from 0 to 1. In this interval the expression in formula (10a) is evaluated and if the result exceeds a predetermined tolerance value $\varepsilon_{max}$ the spline segment is divided in two smaller segments. For each of the segments the evaluation of the expression is repeated and the segment is divided again when the result exceeds the tolerance value. According to this procedure, after a few iterations all spline segments will have a maximum deviation less than the preset tolerance value.

A preferred approach is to consider that formula (10b) directly leads to an approximative error function $\lambda(u)$ which gives an upper limit of the length of a spline segment $\Delta u$ in which the maximum deviation $\varepsilon_{max}$ is not exceeded:

$$\lambda(u) = 4.06 \left[ \frac{\varepsilon_{\max}}{|R|} \right]^{\frac{1}{4}} \left( f_x^2(u) + f_y^2(u) \right)^{-\frac{1}{8}}. \qquad (12)$$

The most important features of this $\lambda(u)$-function are that it does not assume zero and that it is always positive.

The approximation by splines now has to satisfy that for any spline segment the value $\Delta u$ does not exceed the minimum of $\lambda(u)$ in the interval $u_0 \leq u \leq u_0+\Delta u$. This can be done following one of several procedures. A first possibility is determining the overall minimum value of $\Delta(u)$ in the interval from $u=0$ to $u=1$ and subsequently dividing the interval in a number of segments of which none has a length $\Delta u$ larger than said minimum. For example the lengths can be equal, or all segments but one can have a length equal to said minimum value. An alternative approach is a binary procedure in which for a particular segment the minimum value of the approximative error function $\lambda(u)$ is determined. If the minimum value of $\lambda(u)$ in the segment is larger than the length of the segment, the maximum deviation is not exceeded. If the length of the segment exceeds the minimum value of $\lambda(u)$, the segment is split in two segments of equal length and for both the same procedure is repeated. As the minimum value of the approximative error function $\lambda(u)$ is non-zero and positive the procedure will always terminate.

Preferably, the number of segments should be minimized or the segment's length maximized. An algorithm to achieve this is solving the problem of filling the area under the plot of the $\lambda(u)$-function with as few squares as possible in the interval $0 < u < 1$, the squares covering the whole interval. This is illustrated in Figure 3 for the approximative error function of the offset curve shown in Figure 2 for $\varepsilon_{\max}/R = 10^{-3}$. The $\lambda(u)$-function is indicated by line 30. In an interval, starting with $u_k$, where the function $\lambda(u)$ descends the intersection 31 of a linear function $\ell(u) = u-u_k$ and $\lambda(u)$ has to be found. The value $u_{k+1}$ of the intersection is the upper limit of the segment. It should be verified that the minimum of the approximative error function in the interval $<u_k, u_{k+1}>$ occurs at $u_{k+1}$. If the approximative error function is increasing as at the point 33 with value $u_l$ the calculation is simpler, in that case $u_{l+1} = u_l+\lambda(u_l)$ Also now it should be verified that the minimum of $\lambda(u)$ occurs at $u_l$. This procedure has the advantage that the spline segments are calculated one after the other. Accordingly, movement of the tool along the curve parameterised by a particular spline segment can coincide with the calculation being performed at the next spline segment.

Implementation of the above described method for calculating splines describing an offset curve when the contour of the workpiece to be produced is given, results in a numerical control device generating control signals to steer a milling tool sufficiently fast that the calculation can be done during the milling operation, even when the numerical control device is provided with limited resources. A realised embodiment, in which the numerical control device comprised an Intel 80386 microprocessor as a central controller and an Intel 80387 coprocessor yielded acceptable results. The amount of memory needed for the determination of the spline parameterisations was limited to several tens of kilobytes.

## Claims

1. A numerical control device for control of movement of a tool (3) along a path, the numerical control device (5) comprising

   input means for entering path data describing said path,
   conversion means for converting said path data to control signals for steering said tool (3), and
   output means for transfer of said control signals to steering means to which said tool (3) is attached,

   characterised in that the conversion means comprise calculation means including parameterising means arranged for

   receiving said path data, at least partially, as contour data describing a contour to which said path has an offset determined by an offset value, and
   for parameterising said path by means of a plurality of spline segments, each spline segment having end points of which the positions and slopes are derived from said contour data and said offset value,
   in that the conversion means further comprise control signal generation means for generating said control signals for steering said tool (3) along a path determined by said spline segments, and
   said control signal generating means generating control signals for a portion of said tool path prior to said parameterising means generating all of the spline segments for the tool path.

2. A numerical control device as claimed in Claim 1, characterised in that
   the calculation means are arranged for approximating the path in a spline segment by at least one function for which the maximum deviation between path and function can be derived directly.

3. A numerical control device as claimed in Claim 1 or 2, characterised in that

   the calculation means are arranged for receiving the contour data in the form of a differentiable function or a plurality of differentiable functions and that
   the calculation means are arranged for approximating the path in a spline segment by at least one polynomial according to Hermite's formula.

4. A numerical control device as claimed in Claim 3, characterised in that

   the calculation means are arranged for receiving the contour data in the form of parameters describing a multiple differentiable function or a plurality of such functions and in that
   the calculation means are arranged for determining, from said contour data and offset value, an estimated maximum error $\varepsilon_{max}$ between the path and the approximation thereof by a polynomial in a spline segment and for reducing the length of a spline segment if said estimated maximum error exceeds a predetermined tolerance.

5. A numerical control device as claimed in Claim 3 or 4, characterised in that

   the calculation means are arranged for receiving the contour data in the form of parameters describing a multiple differentiable function or a plurality of such functions and in that
   the calculation means are arranged for determining, from said contour data and said offset value, an approximative error function ($\lambda(u)$) and in that the calculation means are further arranged for determining spline segment lengths such that each spline segment has an estimated maximum error not exceeding the value of said maximum error function in a portion of the path approximated by said spline segment.

6. A numerical control device as claimed in Claim 5, characterised in that the calculation means are arranged for determining the lengths of spline segments such that for at least one spline segment said estimated maximum error is substantially equal to the value of said maximum error function in a portion of the path approximated by said at least one spline segment.

7. A numerical control device as claimed in Claim 5, characterised in that the calculation means are arranged for determining the length of spline segments such that for each spline segment the ratio between the estimated maximum error and the value of said maximum error function in a portion of the path approximated by said spline segment is substantially equal.

8. A numerical control device as claimed in Claims 4, 5, 6 or 7, characterised in that the calculation means are arranged for receiving the function or functions describing the contour in the form of parameters of third order polynomials.

9. A numerical control device as claimed in Claims 3, 4, 5, 6, 7 or 8, characterised in that the calculation means are arranged for approximating the path of movement by cubic splines.

10. A numerically controlled machining apparatus for machining of a workpiece according to a predetermined geometry, the machining apparatus being provided with a numerical control device (5) according to any one of the preceding Claims.

11. Method for determining a path of movement of a numerically controlled tool (3), the method comprising

    reading of path data describing said path
    converting said path data into control signals for steering said tool (3), and
    transferring said control signals to said tool (3),

    characterised in that

said path data represent, at least partially, a parameterisation of a contour to which the path of movement has to maintain a distance determined by an offset value,

the conversion from path data to control signals comprise the parameterisation of said path by means of a plurality of spline segments, each spline segment having end points of which the positions and the slopes are derived from said contour parameterisation and said offset value,

the control signals are obtained from the spline parameterisations, and

generating control signals for a portion of the tool path prior to said parameterising step generating all of the spline segments for the tool path.

12. Method according to Claim 11, characterised in that

the provision of contour data as parameters describing a differentiable function or a plurality of differentiable functions and that

the path in each spline segment is approximated by a polynomial according to Hermite's formula.

## Patentansprüche

1. Numerische Steuervorrichtung zur Steuerung der Bewegung eines Werkzeugs (3) entlang eines Weges, wobei die numerische Steuervorrichtung (5) umfaßt:

Eingabemittel zum Eingeben der Wegdaten, die den Weg beschreiben,

Umwandlungsmittel zum Umwandeln der Wegdaten in Steuersignale zum Lenken des Werkzeugs (3), und

Ausgabemittel zur Übermittlung der Steuersignale zu Lenkungsmitteln, an denen das Werkzeug (3) angebracht ist,

dadurch gekennzeichnet, daß die Umwandlungsmittel Berechnungsmittel, die parameterisierende Mittel miteinschließen, umfassen, die so eingerichtet sind, daß sie Wegdaten zumindest teilweise als Umrißdaten empfangen, die einen Umriß beschreiben, zu dem der Weg einen durch einen Versatzwert bestimmten Versatz hat, und

sie den Weg mittels einer Vielzahl von Kurvenabschnitten parameterisieren, wobei jeder Kurvenabschnitt Endpunkte hat, deren Lagen und Anstiege von der Umrißdaten und dem Versatzwert abgeleitet werden,

die Umwandlungsmittel des weiteren Steuersignalerzeugungsmittel umfassen zum Erzeugen der Steuersignale zum Lenken des Werkzeugs (3) entlang eines Weges, der von den Kurvenabschnitten bestimmt ist, und

die Steuersignalerzeugungsmittel Steuersignale für einen Bereich des Werkzeugweges vor der Erzeugung aller Kurvenabschnitte für den Werkzeugweg durch das parameterisierende Mittel erzeugen.

2. Numerische Steuervorrichtung nach Anspruch 1, dadurch gekennzeichnet, daß

die Berechnungsmittel zum Annähern des Weges in einem Kurvenabschnitt durch mindestens eine Funktion eingerichtet sind, für die die größtmögliche Abweichung zwischen Weg und Funktion direkt abgeleitet werden kann.

3. Numerische Steuervorrichtung nach Anspruch 1 oder 2, dadurch gekennzeichnet, daß

die Berechnungsmittel zum Empfang von Umrißdaten in der Form einer differenzierbaren Funktion oder einer Vielzahl von differenzierbaren Funktionen eingerichtet sind, und

die Berechnungsmittel zum Annähern des Weges in einem Kurvenabschnitt durch zumindest ein Polynom gemäß der Hermiteschen Formel eingerichtet sind.

4. Numerische Steuervorrichtung nach Anspruch 3, dadurch gekennzeichnet, daß

die Berechnungsmittel zum Empfang von Umrißdaten in der Form von Parametern, die eine mehrfach differenzierbare Funktion oder eine Vielzahl solcher Funktionen beschreiben, eingerichtet sind, und

die Berechnungsmittel eingerichtet sind zum Berechnen, ausgehend von den Umrißdaten und dem Versatzwert, eines geschätzten größtmöglichen Fehlers $\varepsilon_{max}$ zwischen dem Weg und der Annäherung davon durch ein Polynom in einem Kurvenabschnitt, und zum

Verkürzen der Länge des Kurvenabschnitts, wenn der geschätzte größtmögliche Fehler eine vorbestimmte Toleranz überschreitet.

EP 0 567 195 B1

**5.** Numerische Steuervorrichtung nach Anspruch 3 oder 4, dadurch gekennzeichnet, daß

die Berechnungsmittel zum Empfang von Umrißdaten in der Form von Parametern, die eine mehrfach differenzierbare Funktion oder eine Vielzahl solcher Funktionen beschreiben, eingerichtet sind,
die Berechnungsmittel zum Berechnen, ausgehend von den Umrißdaten und dem Versatzwert, einer Fehler-näherungsfunktion ($\lambda(u)$) eingerichtet sind, und
die Berechnungsmittel des weiteren zum Berechnen der Kurvenabschnittlängen in der Art eingerichtet sind, daß jeder Kurvenabschnitt einen geschätzten größtmöglichen Fehler hat, der den Wert der Maximalfehlerfunktion in einem Bereich des Weges, der durch den Kurvenabschnitt angenähert wird, nicht überschreitet.

**6.** Numerische Steuervorrichtung nach Anspruch 5, dadurch gekennzeichnet, daß die Berechnungsmittel zum Berechnen der Länge des Kurvenabschnitts in der Art eingerichtet sind, daß für zumindest einen Kurvenabschnitt der geschätzte größtmögliche Fehler im wesentlichen gleich dem Wert der Maximalfehlerfunktion in einem Bereich des Weges, der von zumindest dem einen Kurvenabschnitt angenähert wird, ist.

**7.** Numerische Steuervorrichtung nach Anspruch 5, dadurch gekennzeichnet, daß die Berechnungsmittel zum Berechnen der Länge des Kurvenabschnitts in der Art eingerichtet sind, daß für jeden Kurvenabschnitt das Verhältnis zwischen dem geschätzten, größtmöglichen Fehler und dem Wert der Maximalfehlerfunktion in einem Bereich des Weges, der von dem Kurvenabschnitt angenähert wird, im wesentlichen gleich bleibt.

**8.** Numerische Steuervorrichtung nach Anspruch 4, 5, 6 oder 7, dadurch gekennzeichnet, daß die Berechnungsmittel zum Empfang der Funktion oder der Funktionen, die den Umriß in der Form von Parametern von Polynomen der dritten Ordnung beschreiben, eingerichtet sind.

**9.** Numerische Steuervorrichtung nach Anspruch 3, 4, 5, 6, 7 oder 8, dadurch gekennzeichnet, daß die Berechnungsmittel zum Annähern des Weges der Bewegung durch kubische Keile eingerichtet sind.

**10.** Numerisch gesteuerte Bearbeitungsvorrichtung zum Bearbeiten eines Werkstücks gemäß einer vorbestimmten Geometrie, wobei die Bearbeitungsvorrichtung mit einer numerischen Steuervorrichtung (5) entsprechend jedem einzelnen der vorangegangenen Ansprüche versehen ist.

**11.** Verfahren zum Berechnen des Bewegungsweges eines numerisch gesteuerten Werkzeuges (3), wobei das Verfahren umfaßt:

Lesen von Wegdaten, die den Weg beschreiben,
Umwandeln der Wegdaten in Steuersignale zum Lenken des Werkzeugs (3), und
Übertragen der Steuersignale zum Werkzeug (3), dadurch gekennzeichnet, daß
die Wegdaten zumindest teilweise eine Parameterisierung eines Umrisses darstellen, zu dem der Weg der Bewegung einen Abstand, der durch einen Versatzwert bestimmt ist, beibehalten muß,
die Umwandlung von Wegdaten in Steuersignale die Parameterisierung des Weges mittels einer Vielzahl von Kurvenabschnitten umfaßt, wobei jeder Kurvenabschnitt Endpunkte hat, deren Lagen und Anstiege von der Umrißparameterisierung und dem Versatzwert ableitet werden,
die Steuersignale von der Kurvenabschnittparameterisierung bezogen werden, und
die Erzeugung von Steuersignalen für einen Bereich des Werkzeugweges geschieht, noch bevor der Parameterisierungsschritt alle Kurvenabschnitte für den Werkzeugweg erzeugt hat.

**12.** Verfahren nach Anspruch 11, dadurch gekennzeichnet, daß

die Bereitstellung der Umrißdaten als Parameter erfolgt, die eine differenzierbare Funktion oder eine Vielzahl von differenzierbaren Funktionen beschreiben, und
der Weg in jedem Kurvenabschnitt durch ein Polynom gemäß der Hermiteschen Formel angenähert wird.

**Revendications**

**1.** Commande numérique pour commander le déplacement d'un outil (3) le long d'une trajectoire, cette commande numérique (5) comprenant

des moyens d'entrée pour saisir les données décrivant ladite trajectoire,
des moyens de conversion pour convertir lesdites données de trajectoire en signaux de commande pour diriger ledit outil (3), et
des moyens de sortie pour transférer lesdits signaux de commande vers les moyens de direction auxquels ledit outil (3) est fixé,

caractérisée en ce que les moyens de conversion comprennent des moyens de calcul incluant des moyens de paramétrage et conçus pour

recevoir lesdites données de trajectoire au moins partiellement sous la forme de données de contournage décrivant un contour par rapport auquel ladite trajectoire présente un décalage déterminé par une valeur de correction, et pour
paramétrer ladite trajectoire au moyen d'une pluralité de segments spline, chaque segment spline ayant des points d'arrivée dont les positions et les pentes sont déduites desdites données de contournage et de ladite valeur de correction,
en ce que les moyens de conversion comprennent en outre des moyens destinés à générer lesdits signaux de commande pour diriger ledit outil (3) le long d'une trajectoire déterminée par lesdits segments spline, et
en ce que lesdits moyens de génération de signaux de commande produisent des signaux de commande pour une partie de ladite trajectoire d'outil avant que lesdits moyens de paramétrage génèrent l'intégralité des segments spline pour la trajectoire d'outil.

2. Commande numérique selon la revendication 1 caractérisée en ce que les moyens de calcul sont conçus pour s'approcher par approximation la trajectoire dans un segment spline au moyen d'au moins une fonction pour laquelle l'écart maximum entre trajectoire et fonction peut être directement déduit.

3. Commande numérique selon la revendication 1 ou 2 caractérisée en ce que les moyens de calcul sont conçus pour recevoir les données de contournage sous la forme d'une fonction ou d'une pluralité de fonctions pouvant être dérivées et en ce que les moyens de calcul sont aussi conçus pour approcher par approximation la trajectoire dans un segment spline au moyen d'au moins un polynôme conformément à la formule de Hermite.

4. Commande numérique selon la revendication 3 caractérisée en ce que les moyens de calcul sont conçus pour recevoir les données de contournage sous la forme de paramètres décrivant une fonction multiple pouvant être dérivée ou une pluralité de ces fonctions et en ce que

les moyens de calcul sont conçus pour définir une erreur $\varepsilon_{max}$ maximum estimée entre la trajectoire et son approximation au moyen d'un polynôme dans un segment spline, et ce à partir desdites données de contournage et de la valeur de correction, et
pour réduire la longueur d'un segment spline au cas où ladite erreur maximum estimée dépasse une tolérance prédéterminée.

5. Commande numérique selon la revendication 3 ou 4 caractérisée en ce que

les moyens de calcul sont conçus pour recevoir les données de contournage sous la forme de paramètres décrivant une fonction multiple pouvant être dérivée ou une pluralité de ces fonctions, ce à partir des données de contournage et de ladite valeur de correction, en ce
qu'ils sont conçus pour définir une intégrale de Laplace ($\lambda(u)$) approchée et en ce
qu'ils sont en outre conçus pour déterminer des longueurs de segments spline telles que chaque segment spline a une erreur maximum estimée ne dépassant pas la valeur de ladite intégrale de Laplace maximum sur une partie de la trajectoire approchée par approximation au moyen dudit segment spline.

6. Commande numérique selon la revendication 5 caractérisée en ce que les moyens de calcul sont conçus pour déterminer les longueurs des segments spline de manière à ce que pour au moins un segment spline, ladite erreur maximum estimée soit sensiblement égale à la valeur de ladite intégrale de Laplace maximum sur une partie de la trajectoire approchée par approximation au moyen d'au moins un segment spline.

7. Commande numérique selon la revendication 5 caractérisée en ce que les moyens de calcul sont conçus pour déterminer la longueur des segments spline de manière à ce que le rapport entre l'erreur maximum estimée et la valeur de ladite intégrale de Laplace maximum soit sensiblement égal sur une partie de la trajectoire approchée par approximation au moyen dudit segment spline, et ce pour chaque segment spline.

8. Commande numérique selon les revendications 4, 5, 6 ou 7 caractérisée en ce que les moyens de calcul sont conçus pour recevoir sous la forme de paramètres de polynômes de troisième ordre la ou les fonctions décrivant le contour.

9. Commande numérique selon les revendications 3, 4, 5, 6, 7 ou 8 caractérisée en ce que les moyens de calcul sont conçus pour approcher par approximation la trajectoire de déplacement au moyen de splines du troisième degré.

10. Installation d'usinage à commande numérique pour l'usinage d'une pièce conformément à une géométrie prédéterminée, cette installation étant équipée d'une commande numérique (5) selon l'une des revendications précédentes.

11. Procédé pour déterminer la trajectoire de déplacement d'un outil commandé (3) numériquement, ce procédé consistant à

lire les données décrivant ladite trajectoire,
convertir lesdites données de trajectoire en signaux de commande pour la direction dudit outil (3), et
à transmettre lesdits signaux de commande audit outil (3), caractérisé en ce que
lesdites données de trajectoire représentent, au moins en partie, un paramétrage d'un contour par rapport auquel la trajectoire de déplacement doit maintenir un certain écart défini à l'aide d'une valeur de correction,
la conversion desdites données de trajectoire en signaux de commande comprend le paramétrage de la dite trajectoire au moyen d'une pluralité de segments spline, chaque segment spline ayant des points d'arrivée dont les positions et les pentes sont déduites dudit paramétrage de contour et de ladite valeur de correction,
les signaux de commande sont obtenus à partir des paramétrages spline, et
les signaux de commande pour une partie de la trajectoire de l'outil sont générés avant l'opération de paramétrage produisant l'intégralité des segments spline pour la trajectoire de l'outil.

12. Procédé selon la revendication 11 caractérisé en ce que

les données de contour sont fournies sous la forme de paramètres décrivant une fonction ou une pluralité de fonctions pouvant être dérivées et en ce que
dans chaque segment spline, la trajectoire est calculée par approximation au moyen d'un polynôme selon la formule de Hermite.

FIG.1

FIG.2

FIG.3